# EUROPÄISCHE PATENTSCHRIFT

(11) **EP 3 357 667 B1**
(45) Veröffentlichungstag und Bekanntmachung des Hinweises auf die Patenterteilung: **13.04.2022**
(21) Anmeldenummer: 18155184.7
(22) Anmeldetag: 05.02.2018
(51) Int. Cl.: B29C 48/09, B29C 48/25, B29C 48/90

(54) **VAKUUM-TROCKENKALIBRIERWERKZEUG FÜR DIE EXTRUSION EINES KUNSTSTOFFHOHLPROFILS**
VACUUM/DRY-CALIBRATION TOOL FOR EXTRUDING A PLASTIC HOLLOW PROFILE
OUTIL D'ÉTALONNAGE À SEC SOUS VIDE POUR EXTRUSION D'UN PROFILÉ CREUX EN MATIÈRE PLASTIQUE

(30) Priorität: 07.02.2017 DE 102017102387
(43) Veröffentlichungstag der Anmeldung: 08.08.2018
(73) Patentinhaber: Veka AG, 48324 Sendenhorst (DE)
(72) Erfinder: Schmik, Paul, 59229 Ahlen (DE)
(74) Vertreter: Tarvenkorn, Oliver

(56) Entgegenhaltungen:
- CN-A- 104 842 543
- CN-Y- 2 432 036
- DE-A1- 10 237 730

## Beschreibung

Die Erfindung betrifft ein Vakuum-Trockenkalibrierwerkzeug für die Extrusion eines Kunststoffhohlprofils mit den Merkmalen des Oberbegriffs des Anspruchs 1.

Eine solche Trockenkalibrierungsvorrichtung ist aus der EP 879 132 B1 bekannt. Das eigentliche Trockenkaliber ist eine Art Profilschablone, durch welche das noch heiße extrudierte Profil geführt wird. Es besteht aus mehreren metallischen Platten, die über innerer Kanäle mit Wasser temperierbar sind, so dass das Profil über den Kontakt mit den Wänden des Trockenkalibers abkühlt und formstabil wird. Zusätzlich wird bei Hohlprofilen mit in sich geschlossenen Hohlkammern ein äußeres Vakuum angelegt, so dass die Profilwandungen quasi nach außen gesaugt werden, sich somit aufweiten und sich besser an die Flächen des in Extrusionsrichtung folgenden Kalibers anlegen. Im Allgemeinen werden mehrere Trockenkalibereinheiten verwendet, die mit etwas Distanz zueinander angeordnet werden, so dass sich zwischen ihnen eine Trennfuge ausbildet. Diese Trennfuge wird über eine Dichtgummischnur abgedichtet, welche in die Trennfuge eingeklemmt wird. Die Dichtschnur besitzt insbesondere einen Durchmesser von 3 mm bis 10 mm. Dadurch wird eine Vakuumhohlkammer geschaffen. Das Vakuum liegt darin an, weil an wenigstens eine der Trockenkalibereinheiten in dem Kühl- und Kalibrierwerkzeug ein Vakuum angelegt wird. Über Leckageströmungen setzt sich das Vakuum in benachbarte Trockenkalibereinheiten und/oder in den sich anschließenden Hohlraum zwischen zwei Trockenkalibereinheiten fort.

Allerdings gibt es bei der Kunststoffprofilextrusion oftmals Profilsektionen, die sehr empfindlich auf das eingestellte Vakuum reagieren. Das betrifft insbesondere die Stellung von Glasleistenfüßchen. Der sich ausbildende Winkel der Glasleistenfüßchen kann direkt über das in der Hohlkammer anliegende Vakuum verändert werden.

Um gezielt auf die Profilform einwirken zu können, wird der Zwischenraum zwischen benachbarten Trockenkalibereinheiten, z. B. zwischen dem ersten und zweiten Trockenkalibereinheit, wo das Profil noch sehr weich und verformbar ist, belüftet, um das lokale Vakuum zu schwächen. Dazu wird das Dichtgummi vorsichtig aus der üblichen Position gezogen, in der es vollständig dichtend die Trennfuge ausfüllt, so dass eine kleine Öffnung zwischen den benachbarten Trockenkalibereinheiten entsteht und dort der Druck lokal ansteigt. Dieses Vorgehen hat die Schwierigkeit, dass die manuell hergestellte Öffnung durch teilweises Entfernen der Dichtschnur in manchen Fällen zu groß ausfällt und dann das nötige Vakuum nur durch eine Erhöhung der Pumpenleistung erreicht werden kann. Das kostet aber zusätzliche Energie. Öffnet man das Gummi hingegen zu wenig, kann man die Profilgeometrie nicht gezielt verändern.

Die Aufgabe der vorliegenden Erfindung besteht nun darin, ein Vakuum-Trockenkalibrierwerkzeug der eingangs genannten Art so weiterzuentwickeln, dass das Vakuum zwischen den beiden Kalibern feinfühlig einstellbar ist.

Gemäß der vorliegenden Erfindung wird diese Aufgabe durch ein Vakuum-Trockenkalibrierwerkzeug gelöst, bei dem unterhalb der Trennfuge wenigstens eine Ausnehmung in die Kaliberträgerplattform eingebracht ist, welche sich in wenigstens einem Luftkanal fortsetzt, der unterhalb der aufgesetzten Trockenkalibereinheiten verläuft und zu wenigstens einer Mündungsöffnung führt, die in einem von den aufgesetzten Trockenkalibereinheiten nicht abgedeckten Bereich der Kaliberträgerplattform führt. Das Dichtungselement muss zumindest im Bereich der Ausnehmung unterbrochen sein. Außerdem ist an der Mündungsöffnung ein Luftmengenregelventil angeordnet ist.

Diese Lösung ist ebenso einfach wie wirkungsvoll. Als Luftmengenregelventil reicht ein manuell verstellbarer Hahn, wie er in pneumatischen Systemen vielfach verfügbar ist, aus, um eine feinfühlige Einstellung des Belüftungsluftstroms zu ermöglichen. Da der in die Vakuumkammer zugeführte Luftstrom somit in einer Einfahrphase der Extrusionsanlage definiert einstellbar ist und anschließend konstant bleibt, sind elektrische Ventile oder andere Regeleinrichtungen zwar möglich, aber nicht notwendig.

Die Verlagerung des Belüftungswegs in die Kaliberträgerplattform hat den Vorteil, dass sie unabhängig von den darauf aufzusetzenden, profilspezifischen Trockenkalibereinheiten ist. Werden Profile gefertigt, bei denen keine Einstellung des Vakuums notwendig ist oder die ohne anliegendes Vakuum gefahren werden, bleibt der Hahn verschlossen und der in der Trennfuge gebildete, von der Kaliberträgerplattform und dem Dichtungselement umspannte Raum bleibt luftdicht von der Außenluft abgeschirmt. An den aufzusetzenden Trockenkalibereinheiten selbst sind keine Modifikationen erforderlich, insbesondere müssen auch keine Anschlüsse für die Belüftung hergestellt oder gelöst werden.

Durch die Erfindung kann also zum einen die Profilgeometrie feinfühlig und stabil verändert werden und zum anderen wird beim Betrieb der Vakuumpumpe Energie eingespart.

Die Erfindung wird nachfolgend mit Bezug auf die Zeichnungen näher erläutert.

Die Figuren zeigen jeweils in perspektivischer Ansicht:
- Fig. 1: eine Trockenkalibrierungsvorrichtung in schematischer, isometrischer Ansicht und
- Fig. 2: einen Ausschnitt der Kaliberträgerplattform;

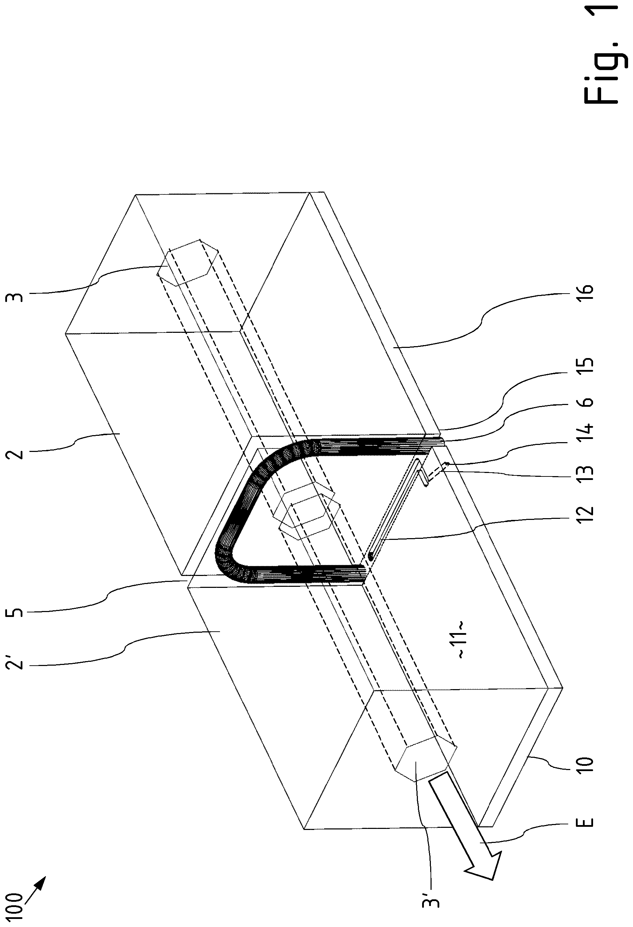

Die Figur 1 zeigt eine Trockenkalibrierungsvorrichtung 100 in schematischer, isometrischer Ansicht, die im Wesentlichen aus einer Kaliberträgerplattform 11 und zwei darauf aufgesetzten Trockenkalibereinheiten 2, 2', die in der durch den Pfeil angedeuteten Extrusionsrichtung E hintereinander angeordnet sind, besteht. Jede Trockenkalibereinheit 2, 2' besitzt einen inneren Profildurchführungskanal 3, 3' mit einer Kontur, die an die Kontur des zu extrudierenden Kunststoffprofils angepasst ist. Jede Trockenkalibereinheit 2, 2' ist also profilspezifisch ausgebildet. Bei einem Profilwechsel in der Extrusionsanlage werden die Trockenkalibereinheiten 2, 2' von der Kaliberträgerplattform 11 abgenommen. Hierzu sind nicht dargestellte Schnellverschlüsse zur mechanischen Kopplung mit der Kaliberträgerplattform 11 vorgesehen.

Die Kaliberträgerplattform 11 kann die Oberseite eines beliebigen Maschinenbetts sein, das in Höhe, Seiten- und Winkellage gut ausrichtbar ist, um eine exakte Flucht mit der Profilausnehmung in der Extruderdüse herstellen zu können, und das stabil genug ist, um die schweren metallischen Trockenkalibereinheiten 2, 2' zu tragen ohne selbst durchzubiegen. In der dargestellten Ausführung ist die Kaliberträgerplattform 11 die Oberseite einer Kaliberträgerplatte 10, die als massive Stahlplatte mit einer Höhe von ca. 15 mm - 20 mm ausgebildet ist.

Die Trockenkalibereinheiten 2, 2' sind in Längsrichtung fluchtend hintereinander auf der Kaliberträgerplattform 11 angeordnet, aber mit einem gewissen Abstand Ihrer Stirnseiten, so dass eine Trennfuge 5 ausgebildet wird. Diese wird über eine Dichtschnur 6 abgedichtet, die von einer Ausnehmung 15 in einer Seitenkante 16 der Kaliberträgerplatte 10 ausgeht, sich in der Trennfuge 5 außen um die Profildurchführungsöffnungen 3, 3' herum zur anderen Seite erstreckt und dort wiederum in einer Ausnehmung 15 der Kaliberträgerplatte 10 eingeklemmt wird oder anderweitig befestigt wird.

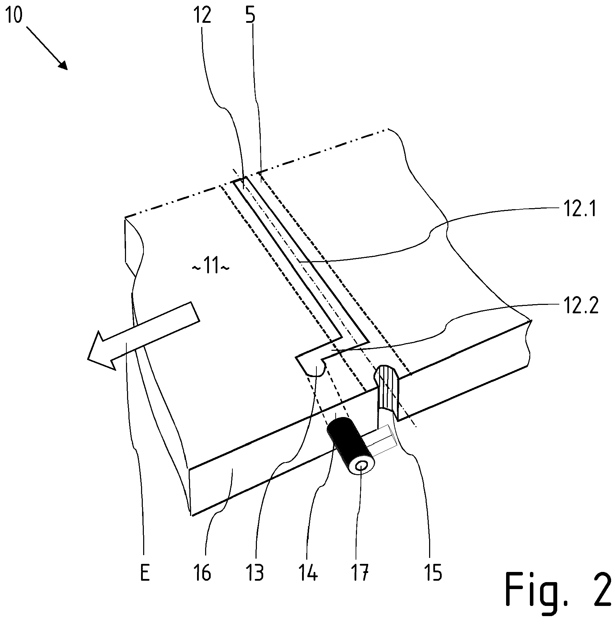

Der insoweit bekannte Aufbau wird erfindungsgemäß wie folgt abgeändert, wobei insbesondere auf die vergrößerte Darstellung nach Figur 2 Bezug genommen wird: Innerhalb der Trennfuge 5, deren Lage durch die punktierten Linien auf der Kaliberträgerplattform 11 gekennzeichnet ist, verläuft ein erster Abschnitt12.1 einer Nut, welcher sich quer zur Extrusionsrichtung E erstreckt. Da genau in der Trennfuge 5 die Dichtschnur 6 (siehe Fig. 1) angeordnet ist und dafür die Klemmnut 15 in die Seitenkante 16 eingebracht ist, kann die Verbindung der Nut 12 mit der Außenseite nicht direkt innerhalb der Trennfuge 5 hergestellt werden, sondern es ist wenigstens ein weiterer Abschnitt 12.2 der Nut 12 erforderlich, um einen Versatz in Extrusionsrichtung E zu bewirken. Der Abschnitt 12.2 der Nut 12 läuft ein Stück weit bis unter eine der auf der Kaliberträgerplatte 10 platzierten Trockenkalibereinheiten 2, 2' und taucht dort mit einer Bohrung 13 in die Tiefe der Kaliberträgerplatte 10 ab. Die Bohrung 13 mündet an einer Mündung 14 in einer Seitenkante 16. Die Mündung 14 ist mit einem Innengewinde versehen, so dass ein Hahnelement 17 darin eingeschraubt werden kann.

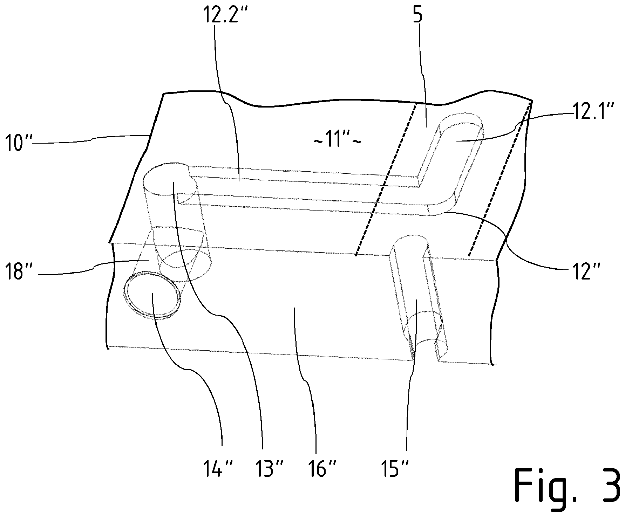

Figur 3 zeigt einen Ausschnitt auf eine weitere Kaliberträgerplatte 10", bei der die Art der Vakuumregulierung prinzipiell gleich ist, aber konstruktiv leicht abweichend gestaltet ist.

Erstes Merkmal ist eine Belüftungsnut 12", die wiederum mit einem sich in Extrusionsrichtung erstreckenden Abschnitt 12.2" aus dem Bereich der Trennfuge 5 herausläuft und an einer Bohrung 13" mündet. Von der Seitenkante 16" aus ist eine Querbohrung 18" eingebracht, die die Bohrung 13" trifft. Die beiden sich schneidenden Bohrungen 13", 18" sind einfach zu fertigen. Eine Mündung 14" der Querbohrung 18" ist mit einem Innengewinde für ein Hahnelement 17 versehen.

Der zweite Unterschied bei der zweiten Ausführungsform der Kaliberträgerplatte 10" ist ein nur sehr kurzer Nutabschnitt 12.2", welcher außerhalb der Überdeckung durch die Trockenkalibereinheit 2 in die Trennfuge 5 läuft. Der kurze Nutabschnitt 12.2" ist für die Belüftung der Trennfuge ausreichend.

## Patentansprüche

1. Vakuum-Trockenkalibrierwerkzeug (100) für die Extrusion eines Kunststoffhohlprofils,
mit wenigstens zwei Trockenkalibereinheiten (2, 2'), welche auf einer gemeinsamen Kaliberträgerplattform (11, 11") in Extrusionsrichtung (E) hintereinander angeordnet sind, wobei jede Trockenkalibereinheit (2, 2') einen inneren Profildurchführungskanal (3, 3') aufweist, der sich zu den Stirnseiten hin öffnet, wobei eine zwischen den Stirnseiten benachbarter Trockenkalibereinheiten(2, 2') ausgebildete Trennfuge (5) durch wenigstens ein Dichtungselement (6) abgedichtet ist
**dadurch gekennzeichnet,**
- **dass** unterhalb der Trennfuge (5) wenigstens eine Ausnehmung (12, 12") in die Kaliberträgerplattform (11, 11") eingebracht ist, welche sich in wenigstens einem Belüftungskanal (13, 13") fortsetzt, der unterhalb wenigstens einer der aufgesetzten Trockenkalibereinheiten (2, 2') zu einer außenliegenden Mündungsöffnung (14, 14") führt und
- **dass** an der Mündungsöffnung (14, 14") ein Luftmengenregelventil (17) angeordnet ist.

2. Vakuum-Trockenkalibrierwerkzeug (100) nach Anspruch 1, **dadurch gekennzeichnet, dass** die Ausnehmung in der Kaliberträgerplattform (11, 11") als eine zumindest teilweise quer zur Extrusionsrichtung (E) ausgerichtete Nut (12, 12") ausgebildet ist.

3. Vakuum-Trockenkalibrierwerkzeug (100) nach Anspruch 2, **dadurch gekennzeichnet, dass** die Nut (12, 12") in Draufsicht auf die Kaliberträgerplattform (11, 11") gesehen L-förmig ausgebildet ist und über einen in Extrusionsrichtung (E) verlaufenden Fortsatz in den Belüftungskanal (13, 13") übergeht.

4. Vakuum-Trockenkalibrierwerkzeug (100) nach einem der vorhergehenden Ansprüche, **dadurch gekennzeichnet, dass** die Kaliberträgerplattform (11, 11") die Oberseite einer Kaliberträgerplatte (10, 10") ist und dass der Belüftungskanal (13, 13") seitlich versetzt zu einer Dichtungsaufnahmenut (15, 15") an einer Seitenkante (16, 16") der Kaliberträgerplatte (10, 10") mündet.

5. Vakuum-Trockenkalibrierwerkzeug (100) nach Anspruch 4, **dadurch gekennzeichnet, dass** sich das Dichtungselement (6) hufeisenförmig von einer Seitenkante (16, 16") zur gegenüberliegenden Seitenkante (16, 16") der Kaliberträgerplatte (10, 10") erstreckt.

6. Vakuum-Trockenkalibrierwerkzeug (100) nach einem der vorhergehenden Ansprüche, **dadurch gekennzeichnet, dass** das Luftmengenregelventil ein manuell betätigbarer Hahn (17) ist.

## Claims

1. Vacuum dry-calibration tool (100) for the extrusion of a plastic hollow profile, having at least two dry-calibration units (2, 2') which are arranged behind one another in the extrusion direction (E) on a common calibration support platform (11, 11"), wherein each dry-calibration unit (2, 2') has an inner profile feed-through channel (3, 3') which opens towards the end sides, wherein a separating joint (5) formed between the end sides of adjacent dry-calibration units (2, 2') is sealed by at least one sealing element (6),
**characterized**
- **in that** at least one cutout (12, 12") is incorporated into the calibration support platform (11, 11") below the separating joint (5) and continues into at least one ventilation channel (13, 13") which leads, below at least one of the applied dry-calibration units (2, 2'), to an outer mouth opening (14, 14"), and
- **in that** an air-quantity control valve (17) is arranged on the mouth opening (14, 14").

2. Vacuum dry-calibration tool (100) according to Claim 1, **characterized in that** the cutout in the calibration support platform (11, 11") takes the form of a groove (12, 12") which is oriented at least partially transversely with respect to the extrusion direction (E).

3. Vacuum dry-calibration tool (100) according to Claim 2, **characterized in that**, as seen in a plan view of the calibration support platform (11, 11"), the groove (12, 12") is L-shaped in form and transitions into the ventilating channel (13, 13") via an extension running in the extrusion direction (E).

4. Vacuum dry-calibration tool (100) according to one of the preceding claims, **characterized in that** the calibration support platform (11, 11") is the upper side of a calibration support plate (10, 10"), and **in that** the ventilation channel (13, 13") opens out with a lateral offset to a seal-receiving groove (15, 15") on a side edge (16, 16") of the calibration support plate (10, 10") .

5. Vacuum dry-calibration tool (100) according to Claim 4, **characterized in that** the sealing element (6) extends in a horseshoe shape from one side edge (16, 16") to the opposite side edge (16, 16") of the calibration support plate (10, 10").

6. Vacuum dry-calibration tool (100) according to one of the preceding claims, **characterized in that** the air-quantity control valve is a manually actuatable cock (17) .

## Revendications

1. Outil de calibrage à sec sous vide (100) pour l'extrusion d'un profilé creux en matière plastique, comprenant au moins deux unités de calibre à sec (2, 2'), qui sont agencées l'une derrière l'autre dans la direction d'extrusion (E) sur une plate-forme de support de calibre commune (11, 11''), chaque unité de calibre à sec (2, 2') présentant un canal intérieur de passage de profilé (3, 3'), qui s'ouvre vers les côtés frontaux, une fente de séparation (5) formée entre les côtés frontaux d'unités de calibre à sec (2, 2') voisines étant étanchéifiée par au moins un élément d'étanchéité (6), **caractérisé en ce que**
- en dessous de la fente de séparation (5), au moins un évidement (12, 12") est pratiqué dans la plate-forme de support de calibre (11, 11''), lequel se prolonge dans au moins un canal d'aération (13, 13") qui mène, en dessous d'au moins l'une des unités de calibre à sec (2, 2') posées, à une ouverture d'embouchure (14, 14") située à l'extérieur, et
- une soupape de régulation de débit d'air (17) est agencée au niveau de l'ouverture d'embouchure (14, 14").

2. Outil de calibrage à sec sous vide (100) selon la revendication 1, **caractérisé en ce que** l'évidement dans la plate-forme de support de calibre (11, 11'") est configuré sous la forme d'une rainure (12, 12") orientée au moins partiellement transversalement à la direction d'extrusion (E).

3. Outil de calibrage à sec sous vide (100) selon la revendication 2, **caractérisé en ce que** la rainure (12, 12''), telle qu'observée en vue de dessus sur la plate-forme de support de calibre (11, 11''), est configurée en forme de L et se poursuit dans le canal d'aération (13, 13") par un prolongement s'étendant dans la direction d'extrusion (E).

4. Outil de calibrage à sec sous vide (100) selon l'une quelconque des revendications précédentes, **caractérisé en ce que** la plate-forme de support de calibre (11, 11") est le côté supérieur d'une plaque de support de calibre (10, 10") et **en ce que** le canal d'aération (13, 13") débouche de manière décalée latéralement par rapport à une rainure de réception de joint d'étanchéité (15, 15") sur un bord latéral (16, 16") de la plaque de support de calibre (10, 10'').

5. Outil de calibrage à sec sous vide (100) selon la revendication 4, **caractérisé en ce que** l'élément d'étanchéité (6) s'étend en forme de fer à cheval d'un bord latéral (16, 16") au bord latéral opposé (16, 16") de la plaque de support de calibre (10, 10").

6. Outil de calibrage à sec sous vide (100) selon l'une quelconque des revendications précédentes, **caractérisé en ce que** la soupape de régulation de débit d'air est un robinet actionnable manuellement (17).
